(19) Europäisches Patentamt
European Patent Office
Office européen des brevets

(11) **EP 3 163 862 A1**

(12) **EUROPEAN PATENT APPLICATION**

(43) Date of publication:
03.05.2017 Bulletin 2017/18

(51) Int Cl.:
*H04N 1/60* (2006.01)          *H04N 9/64* (2006.01)

(21) Application number: 16195580.2

(22) Date of filing: 25.10.2016

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 27.10.2015 JP 2015210630

(71) Applicant: Funai Electric Co., Ltd.
Daito
Osaka 574-0013 (JP)

(72) Inventor: MATSUMOTO, Masanori
Daito, Osaka 574-0013 (JP)

(74) Representative: Global IP Europe
Patentanwaltskanzlei
Pfarrstraße 14
80538 München (DE)

(54) **DISPLAY DEVICE AND DISPLAY SIGNAL GENERATION DEVICE**

(57)    A display device comprises a converter and a display. The converter is configured to convert first gradation values of a plurality of primary colors into second gradation values. The display is configured to display an image based on the second gradation values. An amount of change in the second gradation values with respect to the first gradation values when a differential between maximum and minimum values of the first gradation values is smaller than a predetermined value is larger than the amount of change when the differential is larger than the predetermined value.

*FIG. 2*

EP 3 163 862 A1

**Description**

This application claims priority to Japanese Patent Application No. 2015-210630 filed on October 27, 2015.

BACKGROUND

Field of the Invention

The present invention generally relates to a display device and a display signal generation device. More specifically, the present invention relates to a display signal generation device that drives a display unit comprising sub-pixels of three or more colors based on data comprising three color values.

Background Information

There are conventional display units in which a single pixel is constituted by sub-pixels of three colors, namely red (R), green (G), and blue (B), to which is added a sub-pixel of yellow (Y) or white (W). Data comprising the four color values is required in order to drive a display unit such as this. However, the video signals and so forth that are most commonly encountered are made up of three color values, such as R, G, and B. Accordingly, a display signal generation device that supplies signals to this display unit will be capable of driving the display unit if it is equipped with a circuit, algorithm, or the like for generating data comprising four color values from data comprising three color values.

Examples of methods for producing data comprising four color values from data comprising three color values include a conversion method in which the brightness or saturation of the original data is given emphasis, and a method in which the gradation saturation after conversion is given more emphasis. In addition to these, JP 2007-171907 A discloses a method in which a histogram of gradation differences is produced from data comprising three color values, and a correction value (gain amount) according to the gradation saturation designated by the user is acquired based on this histogram.

SUMMARY

When the saturation is given emphasis, because an attempt is made to maintain the saturation of the original data, when there is a high-brightness component on the screen, the brightness of the data deteriorates after production. Similarly, when brightness is given emphasis, because an attempt is made to maintain the brightness of the original data, when there is a high-brightness component on the screen, the saturation of the data deteriorates after production. With a method in which a histogram is used to produce data comprising four color values as in JP 2007-171907 A, it is necessary to tally up the values of data corresponding to a single pixel in the course of producing the histogram, and this tends to increase the processing load.

One object is to provide a display device and a display signal generation device that drive a display unit in which a single pixel is made up of sub-pixels of three or more colors. With the display device and the display signal generation device, when there is a high-brightness component on the screen, converted data can be produced in which there is a good balance in the relation between saturation and brightness with respect to the original data, without deterioration in the brightness and saturation of the data after production.

[1] In view of the state of the known technology and in accordance with a first aspect of the present invention, the display device comprises a converter and a display. The converter is configured to convert first gradation values of a plurality of primary colors into second gradation values. The display is configured to display an image based on the second gradation values. An amount of change in the second gradation values with respect to the first gradation values when a differential between maximum and minimum values of the first gradation values is smaller than a predetermined value is larger than the amount of change when the differential is larger than the predetermined value.

[2] In accordance with a preferred embodiment according to the display device mentioned above, the converter is configured to decrease the amount of change as the differential increases.

With this display device, as the differential in the gradation between the original first gradation values and the second gradation values increases, the amount of change in the gradation of the second gradation values is reduced with respect to the gradation of the first gradation values. Thus, converted second gradation values can be produced in which a good balance is maintained in the relation between saturation and brightness with respect to the first gradation values.

[3] In accordance with a preferred embodiment according to any one of the display devices mentioned above, the converter is configured to generate the second gradation values for the first gradation values corresponding to a pixel.

[4] In accordance with a preferred embodiment according to any one of the display devices mentioned above, the converter includes a corrector that is configured to correct the second gradation values to be smaller than or equal to a predetermined threshold.

[5] In accordance with a preferred embodiment according to any one of the display devices mentioned above, the second gradation values includes a value of a predetermined color that is different from the primary colors. The value of the predetermined color is set to the minimum value of the first gradation values.

[6] In accordance with a preferred embodiment according to any one of the display devices mentioned above, the second gradation values includes a value of a predetermined color that is different from the primary colors. The converter has a second corrector that is configured to correct the chromaticity of the second gradation values such that the chromaticity of the predetermined color is substantially equal to the chromaticity of a component of the predetermined color obtained from the primary colors of the second gradation values.

[7] In accordance with a preferred embodiment according to any one of the display devices mentioned above, the predetermined color is either white or yellow.

[8] In accordance with a preferred embodiment according to any one of the display devices mentioned above, the converter is configured to convert the first gradation values into the second gradation values using the following formula:

$$So' = (SI - MIN\_RGB)*(k - (MAX\_RGB - MIN\_RGB)/255) + MIN\_RGB$$

where SI represents the first gradation values for the primary colors, So' represents the second gradation values for the primary colors, k represents a correction coefficient, MAX_RGB represents the maximum value of the first gradation values, and MIN_RGB represents the minimum value of the first gradation values.

[9] In accordance with a preferred embodiment according to any one of the display devices mentioned above, the correction coefficient k is a value that is larger than or equal to zero and smaller than three.

[10] In accordance with a preferred embodiment according to any one of the display devices mentioned above, the converter includes a corrector that is configured to correct the second gradation values using the following formula when the second gradation values are larger than a predetermined threshold:

$$So = So' - (MAX\_o' - MAX\_gray)$$

where So represents the corrected second gradation values for the primary colors, So' represents the second gradation values for the primary colors, MAX_o' represents the maximum value of the second gradation values, and MAX_gray represents the predetermined threshold.

[11] In view of the state of the known technology and in accordance with a second aspect of the present invention, a display signal generation device comprises a color conversion signal generator that is configured to convert first gradation values of a plurality of primary colors into second gradation values. The color conversion signal generator includes a differential acquisition component configured to acquire a differential between maximum and minimum values of the first gradation values. The color conversion signal generator is configured to generate the second gradation values to decrease an amount of change in the second gradation values with respect to the first gradation values as the differential increases.

With this display signal generation device, as the differential between the original first gradation values and the second gradation values increases, the amount of change in the second gradation values is reduced with respect to the first gradation values. Thus, converted second gradation values can be produced in which a good balance is maintained in the relation between saturation and brightness with respect to the first gradation values.

[12] In accordance with a preferred embodiment according to the display signal generation device mentioned above, the color conversion signal generator is configured such that the amount of change when the differential is smaller than a predetermined value is larger than the amount of change when the differential is larger than the predetermined value.

[13] In accordance with a preferred embodiment according to any one of the display signal generation devices mentioned above, the color conversion signal generator is configured to generate the second gradation values for the first gradation values corresponding to a pixel.

[14] In accordance with a preferred embodiment according to any one of the display signal generation devices mentioned above, the second gradation values includes a value of a predetermined color that is different from the RGB three primary colors. The value of the predetermined color is set to the minimum value of the first gradation values.

[15] In accordance with a preferred embodiment according to any one of the display signal generation devices mentioned above, the second gradation values includes a value of a predetermined color that is different from the primary colors. The color conversion signal generator has a second corrector that is configured to correct the chromaticity of the second gradation values such that the chromaticity of the predetermined color is substantially equal to the chromaticity of a component of the predetermined color obtained from the primary colors of the second gradation values.

[16] In view of the state of the known technology and in accordance with a third aspect of the present invention, a display device comprises a converter and a display. The converter is configured to convert first gradation values of a plurality of primary colors into second gradation values. The display is configured to display an image based on the second gradation values. The converter is configured to decrease an amount of change in the second gradation values with respect to the first gradation values as a differential between maximum and minimum values of the first gradation values increases.

[17] In accordance with a preferred embodiment according to the display device mentioned above, the converter is configured to generate the second gradation values for the first gradation values corresponding to a pixel.

[18] In accordance with a preferred embodiment according to any one of the display devices mentioned above, the converter is configured to convert the first gradation values into the second gradation values using the following formula:

$$So' = (SI - MIN\_RGB)*(k - (MAX\_RGB - MIN\_RGB)/255) + MIN\_RGB$$

where SI represents the first gradation values for the primary colors, So' represents the second gradation values for the primary colors, k represents a correction coefficient, MAX_RGB represents the maximum value of the first gradation values, and MIN_RGB represents the minimum value of the first gradation values.

[19] In accordance with a preferred embodiment according to any one of the display devices mentioned above, the converter includes a corrector that is configured to correct the second gradation values to be smaller than or equal to a predetermined threshold.

[20] In accordance with a preferred embodiment according to any one of the display devices mentioned above, the second gradation values includes a value of a predetermined color that is different from the primary colors. The converter has a second corrector that is configured to correct the chromaticity of the second gradation values such that the chromaticity of the predetermined color is substantially equal to the chromaticity of a component of the predetermined color obtained from the primary colors of the second gradation values.

BRIEF DESCRIPTION OF THE DRAWINGS

Referring now to the attached drawings which form a part of this original disclosure:

FIG. 1 is a schematic diagram illustrating a display device and a display signal generation device in accordance with a first embodiment;
FIG. 2 is a block diagram illustrating the configuration of the display signal generation device in accordance with the first embodiment;
FIG. 3 is a block diagram illustrating the configuration of a converted data generation circuit in accordance with the first embodiment;
FIG. 4 is a schematic diagram illustrating the function of a maximum/minimum value detector in accordance with the first embodiment;
FIG. 5 is a block diagram illustrating the configuration of an RGBW generator in accordance with the first embodiment;
FIGS. 6A and 6B are schematic diagrams illustrating the processing performed by a first calculator in accordance with the first embodiment;
FIGS. 7A, 7B and 7C are schematic diagrams illustrating the correction of the first colors performed by a second calculator in accordance with the first embodiment;
FIGS. 8A and 8B are schematic diagram illustrating the correction performed by a maximum value corrector in accordance with the first embodiment;
FIGS. 9A and 9B are schematic diagram illustrating the correction of chromaticity in accordance with a second embodiment; and
FIG. 10 is a block diagram illustrating the configuration of an RGBW generator in accordance with the second embodiment.

DETAILED DESCRIPTION OF PREFERRED EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims.
Embodiments of the present invention will now be described in the following order.

1. FIRST EMBODIMENT:

   (1) Configuration of Display Device and Display Signal Generation Device
   (2) Configuration of Converted Data Generation Circuit
   (3) Action and Effect

2. SECOND EMBODIMENT
3. THIRD EMBODIMENT
4. OTHER EMBODIMENT

1. FIRST EMBODIMENT

(1) Configuration of Display Device and Display Signal Generation Device

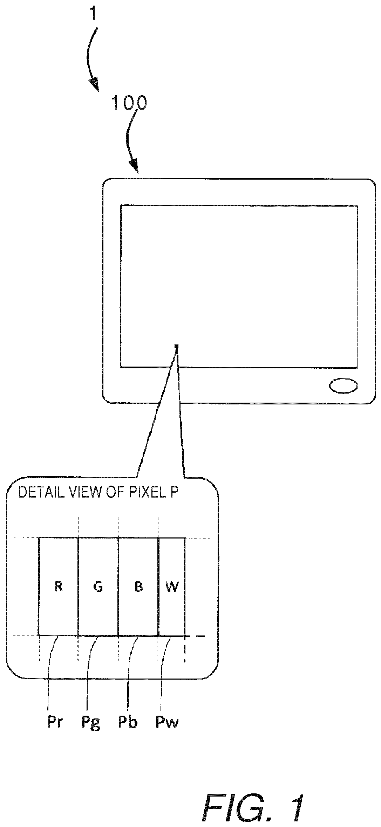

FIG. 1 illustrates a display device 1 and a display signal generation device 100 in accordance with a first embodiment.
In this embodiment, a television receiver will be used as an example to describe the display device 1 and the display signal generation device 100. However, the display device 1 and the display signal generation device 100 may instead be a personal computer, a mobile telephone, or a tablet terminal. Also, source data (Data1) included in input data (Data_IN) will be used as an example to describe first data comprising three color values (RGB three primary colors or a plurality of primary colors).
The input data (Data_IN) is, for example, a television broadcast signal, Web content acquired over a network N, video input from an external device, or video data stored in an external memory device.
The source data (Data1) is a video signal constituting a stream included in the various sets of input data (Data_IN) mentioned above.
The display signal generation device 100 has a display unit 150 (display) in which a single pixel is made up of sub-pixels of four colors (Pr, Pg, Pb, Pw). In FIG. 1, the display unit 150 (discussed below) forms the screen of the display signal generation device 100. With this screen, a single pixel P consists of a sub-pixel Pr comprising a red (R) color film, a sub-pixel Pg comprising a green (G) color film, a sub-pixel Pb comprising a blue (B) color film, and a sub-pixel Pw comprising a white (W) color film.

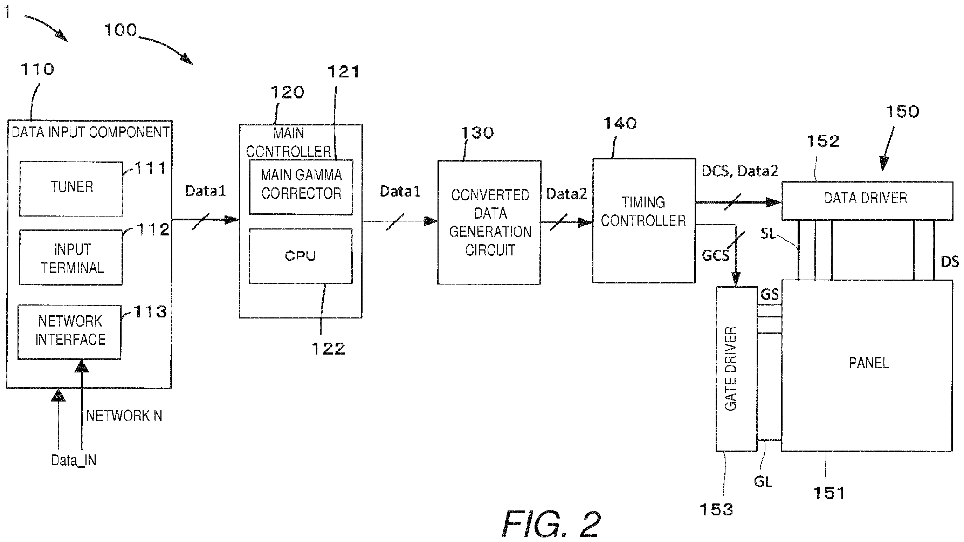

FIG. 2 is a block diagram of the display signal generation device 100. The display signal generation device 100 includes a data input component 110, a main controller 120, a converted data generation circuit 130, a timing controller 140, and the display unit 150. The data input component 110 receives input data (Data_IN) including source data (Data1). The converted data generation circuit 130 generates converted data (Data2) based on the source data (Data1). The timing controller 140 generates a signal for driving the display unit 150 based on the converted data (Data2). The display unit 150 has a screen. In this embodiment, the converted data generation circuit 130 forms a color conversion signal generator or a signal convertor of the present disclosure. In the illustrated embodiment, the display signal generation device 100 is illustrated as having the data input component 110, the main controller 120, the converted data generation circuit 130, the timing controller 140, and the display unit 150, and thus the display device 1 basically has the same configuration as the display signal generation device 100. However, of course, the display signal generation device 100 can be configured to only include the converted data generation circuit 130. In this case, the display device 1 includes the display signal generation device 100 (i.e., the converted data generation circuit 130). Specifically, the display device 1 includes the display signal generation device 100 (i.e., the converted data generation circuit 130), the data input component 110, the main controller 120, the timing controller 140, and the display unit 150.
In this embodiment, the data input component 110, the main controller 120, the converted data generation circuit 130, and the timing controller 140 are described as independent integrated circuits or other such circuits (processors). However, this is not the only option. These components may instead be realized by function blocks of a one-chip microcomputer or a circuit. In addition, the converted data generation circuit 130 and the timing controller 140 may be realized by function blocks mounted in the main controller 120. Also, the display signal generation device 100 can include other conventional components such as an input interface circuit, an output interface circuit, and storage devices such as a ROM (Read Only Memory) device and a RAM (Random Access Memory) device. The integrated circuits of the display signal generation device 100 are programmed to control the corresponding components. The storage devices stores processing results and control programs. Specifically, the RAM device stores statuses of operational flags and various control data. The ROM device stores the programs for various operations.

The data input component 110 comprises a tuner 111, an input terminal 112, and a network interface 113. The tuner 111 is connected to a cable or an antenna (not shown) to receive a television broadcast signal, for example. The input terminal 112 connected to an HDMI (registered trademark) or other such input line (not shown) to receive is video input from an external device, or video data stored in an external memory device, for example. The network interface 113 is connected to the Internet or another such network (not shown) to receive Web content over a network N. The data input component 110 takes out the source data (Data1) from the input data (Data_IN) that is acquired. In addition to the above, the data input component 110 is also constituted by a hard disk, a flash memory, or another such external memory device. The source data (Data1) may be provided from this external memory device.

The main controller 120 is connected on then output side of the data input component 110. The main controller 120 comprises a main gamma corrector 121, and a central processing unit (CPU) 12. The main gamma corrector 121 performs gamma correction on the source data (Data1) inputted from the data input component 110. The CPU 122 performs comprehensive control of the drive of the various components constituting the display signal generation device 100 and the calculation processing of the source data (Data1). The main gamma corrector 121 plots the source data (Data1) according to the white balance of the display unit 150. The CPU 122 performs comprehensive control of the operation of the various components constituting the display signal generation device 100. As mentioned above, the main controller 120 can be formed by a single processor (processing circuit) or a plurality of processors (processing circuits).

The converted data generation circuit 130 is a processor or circuit that is connected on the output side of the main controller 120. The converted data generation circuit 130 successively converts the colors (Ri, Gi, Bi) of the source data (Data1) corresponding to a single pixel outputted from the main controller 120, into the converted data (Data2). Then, the converted data generation circuit 130 outputs the result. The converted data (Data2) includes a second color (W) in addition to the first colors (R, G, B). The converted data (Data2) corresponds to the second signal or second gradation values of the present disclosure. The configuration and function of the converted data generation circuit 130 will be described below. The values of the first colors of the source data (Data1) will sometimes be written simply as "first colors" below, while the color itself made by the first colors (the primary colors) will be written as "first color".

The timing controller 140 is connected on the output side of the converted data generation circuit 130. The timing controller 140 is constituted by a known IC or the like. The timing controller 140 generates signals (DCS and GCS) for driving the display unit 150 based on signals (Dclck, Hsync, Vsync, and DE) outputted from the main controller, and the converted data (Data2) outputted from the converted data generation circuit 130.

The display unit 150 is connected on the output side of the timing controller 140. The display unit 150 includes a passive matrix or active matrix type of liquid crystal display panel. The display unit 150 includes a panel 151, a data driver 152, and a gate driver 153. The panel 151 is configured such that pixels are arranged in a matrix according to the resolution. The data driver 152 and the gate driver 153 drive the panel 151 based on a signal from the timing controller 140. The configuration of the display unit 150 is well known in the art, and thus detailed description of the configuration will be omitted for the sake of brevity.

As shown in FIG. 1, the pixels of the panel 151 each comprise sub-pixels (Pr, Pg, Pb, Pw) having color films of four colors (R, G, B, W). A plurality of source lines SL and a plurality of gate lines GL are connected to each of the sub-pixels (Pr, Pg, Pb, Pw) via a switching element (not shown).

The data driver 152 is connected to the timing controller 140 on the input side. The data driver 152 receives the supply of converted data (Data2) or data clock signals from the timing controller 140. The data driver 152 comprises a DAC (digital-to-analog converter) that generates analog voltage (drive signal DS) according to the gradation value of the converted data (Data2). The data driver 152 synchronizes the drive signal DS to a data clock signal DCS for output to a source line SL.

The gate driver 153 is connected to the timing controller 140 on the input side. The gate driver 153 is connected to the plurality of gate lines GL of the panel 151 on the output side of the timing controller 140. The gate driver 153 outputs a gate signal GS to the gate line GL selected by a gate clock signal GCS.

(2) Configuration of Converted Data Generation Circuit

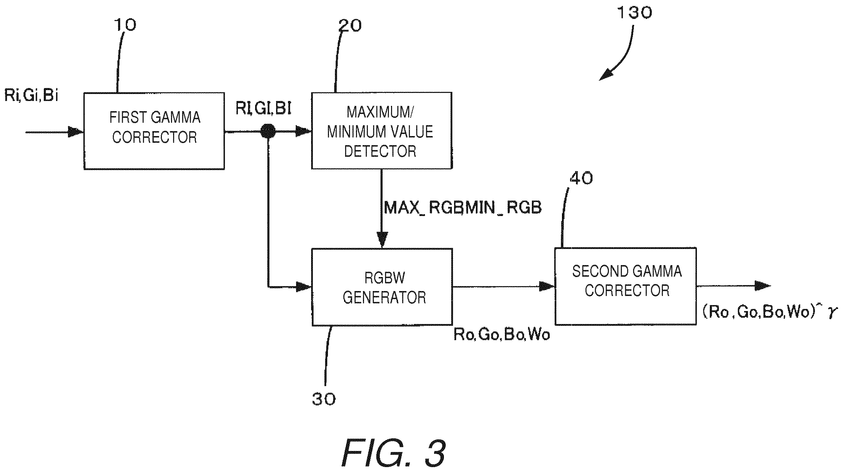

The configuration of the converted data generation circuit 130 will now be described. FIG. 3 is a block diagram illustrating the configuration of the converted data generation circuit 130. The converted data generation circuit 130 comprises a first gamma corrector 10, a maximum/minimum value detector 20, an RGBW generator 30, and a second gamma corrector 40. The first gamma corrector 10 cancels gamma correction of the source data (Data1). The maximum/minimum value detector 20 detects the maximum value of the source data (Data1) and minimum value of the source data (Data1). The RGBW generator 30 acquires the values of the first colors and the second color based on the values of the first colors of the source data (Data1). The second gamma corrector 40 performs gamma correction on the values of the first colors and the second color outputted from the RGBW generator 30.

The source data (Data1) outputted from the main controller 120 is first inputted to the first gamma corrector 10. The first gamma corrector 10 performs reverse gamma correction, in which the gamma correction performed by the main gamma corrector 121 on the first colors (Ri, Gi, Bi) of the source data (Data1) is cancelled. For example, this reverse gamma correction involves performing the calculation expressed by the following Formula (1).

$$RI = Ri^{\wedge}\gamma$$

$$GI = Gi^{\wedge}\gamma$$

$$BI = Bi^{\wedge}\gamma \qquad \ldots (1)$$

RI, GI, and BI here are the gradation values of the first colors after correction, y is a gamma coefficient, and "^" means to the power of.

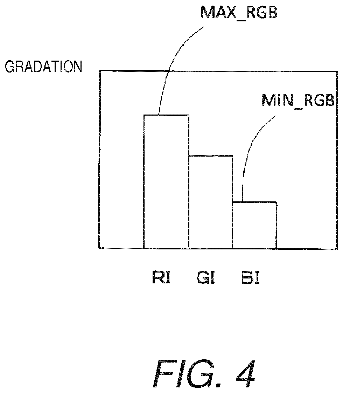

The first colors (RI, GI, BI) for which gamma correction has been cancelled by the first gamma corrector 10 are inputted to the maximum/minimum value detector 20. The maximum/ minimum value detector 20 detects the maximum value (MAX_RGB) of the first colors (RI, GI, BI) at which the gradation value is at its maximum, and the minimum value (MIN_RGB) of the first colors (RI, GI, BI) at which the gradation value is at its minimum. FIG. 4 illustrates the function of the maximum/minimum value detector 20. In FIG. 4, of the first colors (RI, GI, BI), "RI" is the one with the maximum gradation value, and "BI" is the one with the minimum gradation value. Therefore, in FIG. 4 the maximum/minimum value detector 20 uses the gradation value of RI as the maximum value (MAX_RGB), and uses the gradation value of BI as the minimum value (MIN_RGB). For example, if the first colors (RI, GI, BI) are each made up of 8 bits, the maximum value (MAX_RGB) and the minimum value (MIN_RGB) will range from 0 to 255.

The values of the first colors (RI, GI, BI) outputted from the first gamma corrector 10 are also inputted to the RGBW generator 30. The RGBW generator 30 generates the values for R, G, B, and W based on the values of the first colors (RI, GI, BI) outputted from the first gamma corrector 10. Naturally, the generation of converted data (Data2) is also performed by the RGBW generator 30 every time source data (Data1) corresponding to one pixel is inputted.

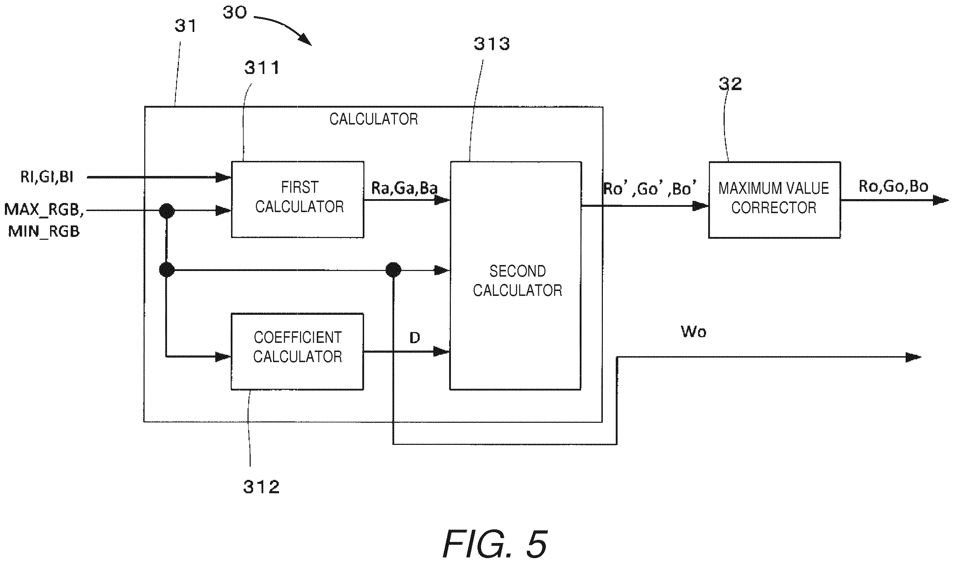

FIG. 5 is a block diagram illustrating the configuration of the RGBW generator 30. The RGBW generator 30 has a calculator 31, and a maximum value corrector 32. The calculator 31 generates the values of the four colors (R, G, B, W) from the first colors (RI, GI, BI). The maximum value corrector 32 corrects the values of the first colors converted by the calculator 31 so as not to exceed the predetermined number of gradations (such as 0 to 255) of the converted data (Data2). In this embodiment, the first colors outputted by the calculator 31 are indicated as (Ro', Go', Bo'), while the first colors outputted by the maximum value corrector 32 are indicated as (Ro, Go, Bo) to distinguish them from each other.

The calculator 31 has a first calculator 311, a coefficient calculator 312, and a second calculator 313. The first calculator 311 subtracts the value corresponding to the gradation value of the second color (W) from the values of the first colors (RI, GI, BI). The coefficient calculator 312 calculates a correction coefficient D based on the saturation or chroma of the first color. The second calculator 313 corrects the output of the first calculator 311 based on the correction coefficient D and the output of the first calculator 311.

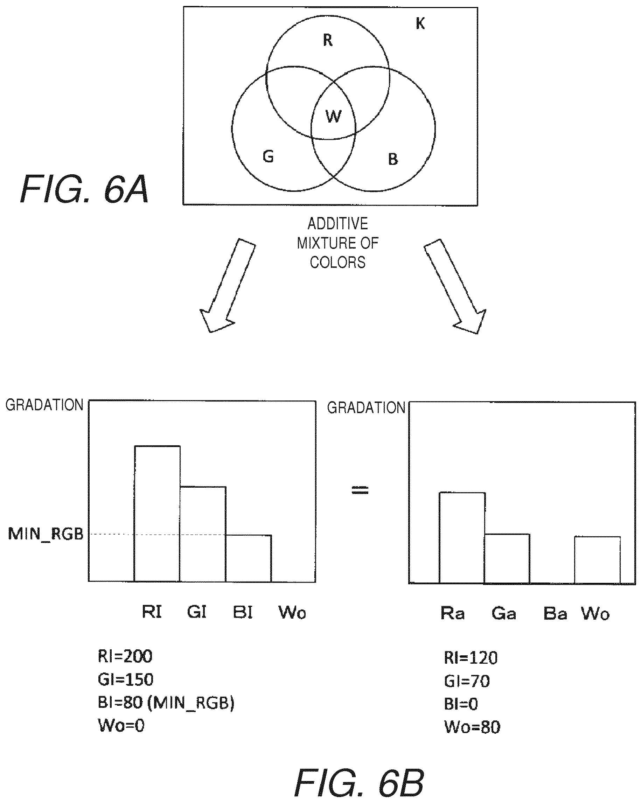

FIGS. 6A and 6B illustrate the processing performed by the first calculator 311. As shown in FIG. 6A, in the additive mixture of colors, if the background is black (K) and the first colors (R, G, B) are mixed in equal amounts, then the result is white (W). Thus, the lightness can be theoretically maintained even when the gradation value corresponding to the maximum common divisor (that is, the minimum value (MIN_RGB)) of the gradation values of the first colors (RI, GI, BI) is changed to the second color (W). Accordingly, the first calculator 311 generates the first colors (Ra, Ga, Ba) by subtracting the minimum value (MIN_RGB) obtained by the maximum/minimum value detector 20 from the values of the first colors (RI, GI, BI) outputted from the first gamma corrector 10, based on the following Formula (2), for example.

$$Ra = RI - MIN\_RGB$$

$$Ga = GI - MIN\_RGB$$

$$Ba = BI - MIN\_RGB \qquad \ldots (2)$$

FIG. 6B shows the first colors converted by the first calculator 311 when (RI, GI, BI) = (200, 150, 80). In the example shown in FIG. 6B, MIN_RGB is "80." Thus, the first colors (Ra, Ga, Ba) converted by the first calculator 311 has values of (120, 70, 0). Similarly, MIN_RGB is the gradation value for the second color (W). Thus, the gradation value for W is "80."

This processing is premised on the fact that the second signal (second gradation values) includes a white color signal (predetermined color) that is different from the RGB three primary colors, and corresponds to setting the brightness value (the gradation value) for the predetermined color signal to the minimum value for the gradation in the first signal (first gradation values).

The coefficient calculator 312 calculates the correction coefficient D used by the second calculator 313, based on the saturation S of the first color (the source data (Data1)). First, in order to describe the correction coefficient D, the correction of the first colors performed by the second calculator 313 will be described.

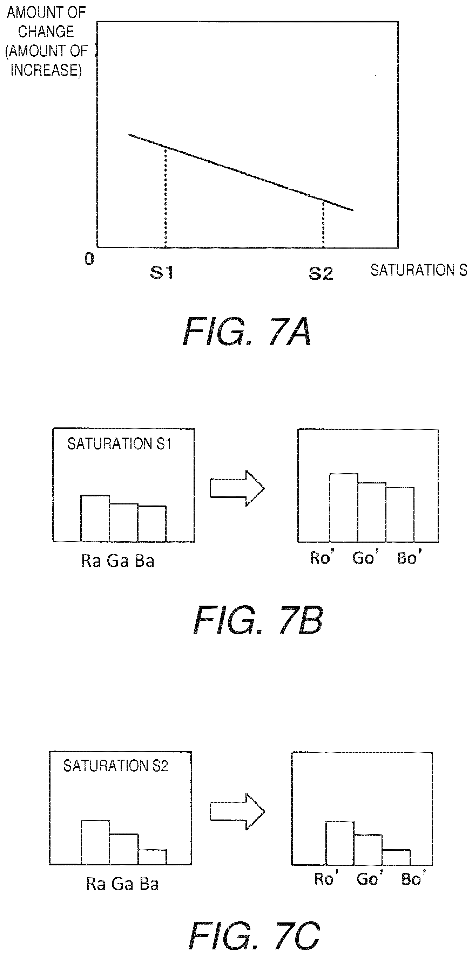

FIGS. 7A, 7B and 7C illustrate the correction of the first colors performed by the second calculator 313. As shown in FIG. 7A, in this embodiment, the second calculator 313 performs the correction such that as the saturation S of the first color (Ra, Ga, Ba) outputted from the first calculator 311 increases, the amount of change (the increase) in the gradation values after conversion decreases. For example, with the first colors (Ra, Ga, Ba) shown in FIGS. 7B and 7C, if the saturation S2 of the first color in FIG. 7C is greater than the saturation S1 of the first color in FIG. 7B, then the amount of change (the increase) in the gradation values of the first colors (Ro', Go', Bo') after correction by the second calculator 313 will be smaller for the first colors corresponding to the saturation S2.

Regardless of the saturation S, when the values of the first colors of the source data (Data1) are increased equally, it becomes more likely that the gradation will reach the saturation (the upper limit) and image quality will suffer. On the other hand, the number of pixels in which gradation saturation occurs can be reduced by decreasing the amount of increase for the source data (Data1), which has a large saturation S, below that of the source data (Data2), which has a lower saturation S.

The coefficient calculator 312 finds the first correction coefficient D used by the second calculator 313 such that the correction done by the second calculator 313 will have the characteristics shown in FIGS. 7A, 7B and 7C.

The coefficient calculator 312 calculates the first correction coefficient D based on the following Formula (3) and the maximum value (MAX_RGB) and the minimum value (MIN_RGB) obtained by the RGBW generator 30.

$$D = f(\text{MAX\_RGB}, \text{MIN\_RGB}) = (\text{MAX\_RGB} - \text{MIN\_RGB})/255 \quad \dots (3)$$

Specifically, in this embodiment, the coefficient calculator 312 approximately acquires the saturation S based on the differential between the maximum value (MAX_RGB) and the minimum value (MIN_RGB). The coefficient calculator 312 forms the gradation differential acquisition component (the differential acquisition component) of the present disclosure. In other words, in the illustrated embodiment, the saturation S of the first color (Ra, Ga, Ba) is approximately obtained as the differential between the maximum value (MAX_RGB) and the minimum value (MIN_RGB) of the first colors (RI, GI, BI), for example. More specifically, in the illustrated embodiment, the differential between the maximum value (MAX_RGB) and the minimum value (MIN_RGB) corresponds to the saturation S (chroma) in the cone model of the HSV color space. Thus, an axis of the saturation S in FIG. 7A can be replaced with an axis of the differential between the maximum value (MAX_RGB) and the minimum value (MIN_RGB).

Using the above-mentioned Formula (3) is an example of a method for calculating the first correction coefficient D. It is also possible to use a calculation formula such as D = (MAX_RGB - MIN_RGB)/MAX_RGB.

The second calculator 313 corrects the values of the first colors (Ra, Ga, Ba) based on the following Formula (4) and the first correction coefficient D obtained by the coefficient calculator 312.

$$\text{Ro'} = \text{Ra} * (k - D) + \text{MIN\_RGB}$$

$$\text{Go'} = \text{Ga} * (k - D) + \text{MIN\_RGB}$$

$$\text{Bo'} = \text{Ba} * (k - D) + \text{MIN\_RGB} \quad \dots (4)$$

These conversion equations can be expressed in further detail as follows.

$$\text{Ro'} = (\text{RI} - \text{MIN\_RGB}) * (k - (\text{MAX\_RGB} - \text{MIN\_RGB})/255) + \text{MIN\_RGB}$$

$$Go' = (GI - MIN\_RGB) * (k - (MAX\_RGB - MIN\_RGB)/255) +$$

MIN_RGB

$$Bo' = (BI - MIN\_RGB) * (k - (MAX\_RGB - MIN\_RGB)/255) +$$

MIN_RGB

Here, RI, GI, and BI represent the first signal (first gradation values), Ro', Go', and Bo' represent the second signal (second gradation values), k is a second correction coefficient, MAX_RGB is the maximum gradation in the first signal, and MIN_RGB is the minimum gradation in the first signal. In the illustrated embodiment, the input signal to the first calculator 311 directly from the first gamma corrector 10 forms the first signal, while the output signal to the maximum value corrector 32 from the second calculator 313 forms the second signal.

Also, k is the second correction coefficient with a value that is greater than or equal to zero and less than three. As shown in the above-mentioned Formula (4), the larger is the value of the first correction coefficient D obtained according to the saturation S of the first color (Ra, Ga, Ba), the smaller is the value of the correction coefficient (k - D). Thus, the amount of change in the first colors (Ro', Go', Bo') after correction is smaller.

In the above-mentioned Formula (4), the gradation value (MIN_RGB) corresponding to the second color is again added to the first colors (Ra, Ga, Ba) to which the correction coefficient (k - D) has been multiplied. However, this is not the only option. For instance, the configuration may be such that the value of the second correction coefficient k is adjusted to raise the increase amount with respect to the first colors (Ra, Ga, Ba), without adding the minimum value (MIN_RGB).

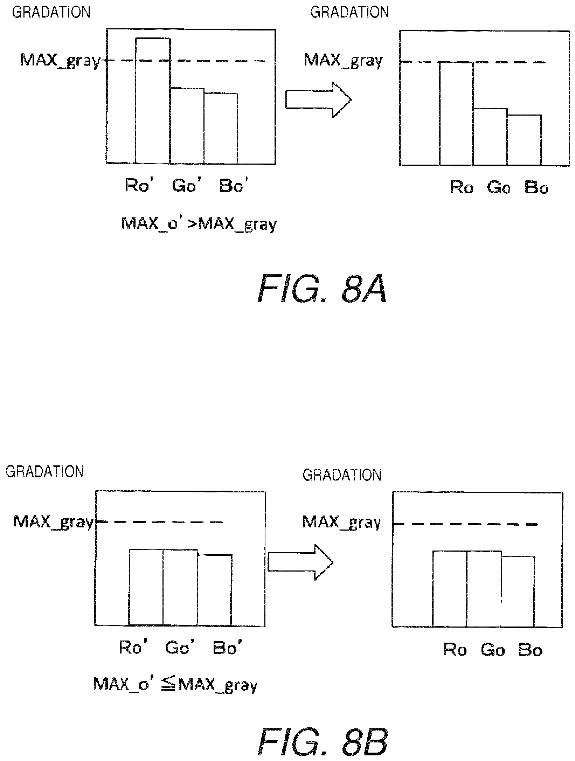

The first colors (Ro', Go', Bo') corrected by the second calculator 313 are inputted to the maximum value corrector 32. FIGS. 8A and 8B illustrate the correction executed by the maximum value corrector 32. The maximum value corrector 32 corrects the first colors (Ro', Go', Bo') generated by the calculator 31 so as not to exceed the range of the maximum gradation range (such as 0 to 255) specified by the converted data (Data2). FIG. 8A shows the processing when the first colors (Ro', Go', Bo') exceed the maximum gradation (MAX_gray). FIG. 8B shows the processing when the first colors (Ro', Go', Bo') are under the maximum gradation (MAX_gray).

As shown in FIG. 8A, the maximum value corrector 32 corrects the values of the first colors (Ro', Go', Bo') according to the following Formula (5) when the first colors (Ro', Go', Bo') exceed the maximum gradation (MAX_gray). In this case, the maximum value corrector 32 performs the correction so that the values of the first colors (Ro', Go', Bo') will be under MAX_gray.

As shown in FIG. 8B, the maximum value corrector 32 corrects the values of the first colors (Ro', Go', Bo') according to the following Formula (6) when the first colors (Ro', Go', Bo') are under the maximum gradation (MAX_gray). In this case, the maximum value corrector 32 outputs the values of the first colors (Ro', Go', Bo') without any change. Here, the maximum gradation (MAX_gray) is the maximum value of gradation at which the converted data (Data2) can be obtained. The maximum gradation (MAX_gray) is 255 in the case of 8 bits. MAX_o' is the maximum gradation value out of the values of the first colors (Ro', Go', Bo') that are outputted from the calculator 31. For example, when the values of the first colors (Ro', Go', Bo') are (260, 240, 200), then MAX_o' is "260."

$$Ro = Ro' - (MAX\_o' - MAX\_gray)$$

$$Go = Go' - (MAX\_o' - MAX\_gray)$$

$$Bo = Bo' - (MAX\_o' - MAX\_gray) \qquad \dots (5)$$

$$Ro = Ro'$$

$$Go = Go'$$

$$Bo = Bo' \qquad \dots (6)$$

Returning to FIG. 5, the first colors (Ro, Go, Bo) outputted from the maximum value corrector 32 and the second color (Wo) outputted from the calculator 31 are inputted to the second gamma corrector 40. The second gamma corrector 40 performs gamma correction again on the first colors (Ro, Go, Bo) outputted from the maximum value corrector 32 and the second color (Wo) outputted from the calculator 31. The gamma correction performed by the second gamma corrector 40 is the same as the gamma correction performed by the main gamma corrector 121, and therefore will not be described again.

The converted data (Data2) that has undergone correction by the second gamma corrector 40 is inputted to the timing controller 140. The signal from the timing controller 140 drives the display unit 150, and an image based on the converted data (Data2) is displayed.

(3) Action and Effect

As described above, with the display device 1 and the display signal generation device 100 pertaining to this first embodiment, the converted data (Data2) is generated such that as the saturation S of the first color (gradation differential) in the source data (Data1) (first signal or first gradation values) that serves as the original increases, the amount of change in the gradation of the converted data (Data2) (second signal or second gradation values) will become smaller. This suppresses the increase in the source data (Data1) with a high saturation S. As a result, gradation saturation is less likely to occur in the converted data (Data2) (after conversion). Thus, a display device 1 and the display signal generation device 100 can be provided that generate converted data (Data2) in which the relation between brightness and saturation with respect to the original source data (Data1) is kept in a good balance.

Thus, in the illustrated embodiment, the display device 1 and the display signal generation device 100 have the converted data generation circuit 130 (e.g., a color conversion signal generator, a signal converter, or a converter). The converted data generation circuit 130 converts the first signal of the RGB three primary colors into the second signal. The converted data generation circuit 130 (e.g., the color conversion signal generator) includes the coefficient calculator 312 (e.g., the differential acquisition component). The coefficient calculator 312 acquires the gradation differential between the maximum value and the minimum value for the gradation (the gradation value) in the first signal. The second signal is generated such that as the acquired gradation differential increases, the amount of change in the gradation of the second signal with respect to the gradation of the first signal becomes smaller.

As a result, with the converted data generation circuit 130 (e.g., the color conversion signal generator), the amount of change in the gradation of the second signal with respect to the gradation of the first signal when the acquired gradation differential is less than a predetermined value will be larger than the amount of change in the gradation of the second signal with respect to the gradation of the first signal when the acquired gradation differential is greater than the predetermined value.

The converted data generation circuit 130 generates the converted data (Data2) (second signal) every time source data (Data1) corresponding to a single pixel is inputted (for every first signal). Thus, there is no need to tally up the values of data for the total number of pixels included in one picture. This reduces the processing load required for generation, and also means that generation takes less time.

The processing load required to acquire the saturation S can be reduced by calculating the saturation S of the source data (Data1) based on the differential between the maximum gradation value and the minimum gradation value for the first colors in a single pixel.

In the illustrated embodiment, the display device 1 comprises the converted data generation circuit 130 (e.g., the converter) configured to convert the source data (Data1) or the first colors (RI, GI, BI) (e.g., the first signal or first gradation values) of RGB three primary colors into the the first colors (Ro', Go', Bo') or the converted data (Data2) (e.g., the second signal or second gradation values). The converted data generation circuit 130 is configured to convert the first signal to the second signal to decrease the amount of change in the values of the first colors (Ro', Go', Bo') (e.g., the gradation of the second signal or second gradation values) with respect to the values of the first colors (RI, GI, BI) (or the first colors (Ra, Ga, Ba)) (e.g., the gradation of the first signal or first gradation values) as the gradation differential (MAX_RGB - MIN_RGB) between MAX_RGB (e.g., the maximum value) and MIN_RGB (e.g., the minimum value) of the values of the first colors (RI, GI, BI) increases.

In the illustrated embodiment, with this display device 1 mentioned above, the amount of change in the values of the first colors (Ro', Go', Bo') with respect to the values of the first colors (RI, GI, BI) (or the first colors (Ra, Ga, Ba)) when the gradation differential is less than a predetermined value is greater than the amount of change in the values of the first colors (Ro', Go', Bo') with respect to the values of the first colors (RI, GI, BI) (or the first colors (Ra, Ga, Ba)) when the gradation differential is greater than the predetermined value. Here, the predetermined value can be any value within the range of the value of the gradation differential. In other words, the predetermined value can be any value between 0 and 255 for 8 bits. For example, the predetermined value can be 127.

In the illustrated embodiment, with this display device 1 mentioned above, the converted data generation circuit 130 is configured to generate the converted data (Data2) (e.g., the second signal or second gradation values) for every source data (Data1) (e.g., first signal or first gradation values) corresponding to a pixel.

In the illustrated embodiment, with the display device 1 mentioned above, the converted data generation circuit 130 is configured to convert the source data (Data1) (e.g., the first signal or first gradation values) to the converted data (Data2) (e.g., the second signal or second gradation values) using the following formula:

$$So' = (SI - MIN\_RGB)*(k - (MAX\_RGB - MIN\_RGB)/255) + MIN\_RGB$$

where SI represents the values of the first colors (RI, GI, BI) (e.g., the first signal for each of the RGB three primary colors or first gradation values for the primary colors), So' represents the values of the first colors (Ro', Go', Bo') (e.g., second signal for each of the RGB three primary colors or second gradation values for the primary colors), k represents a correction coefficient, MAX_RGB represents the maximum value of the values of the first colors (RI, GI, BI) (e.g., the gradation in the first signal or first gradation values), and MIN_RGB represents the minimum value of the values of the first colors (RI, GI, BI) (e.g., the gradation in the first signal or first gradation values).

In the illustrated embodiment, with this display device 1 mentioned above, the correction coefficient k is a value that is greater than or equal to zero and less than three.

In the illustrated embodiment, with this display device 1 mentioned above, the converted data generation circuit 130 (e.g., the signal converter or converter) includes the maximum value corrector 32 (e.g., the corrector) that is configured to correct the values of the first colors (Ro', Go', Bo') (e.g., the gradation of the second signal or second gradation values) to be less than or equal to the maximum gradation (MAX_gray) (e.g., the predetermined threshold). In the illustrated embodiment, the maximum value corrector 32 corrects the first colors (Ro', Go', Bo') so as not to exceed the range of the maximum gradation range (such as 0 to 255) specified by the converted data (Data2). In other words, in the illustrated embodiment the predetermined threshold is set to the value of 255. However, the predetermined threshold can be different value according to the number of bits specified by the converted data (Data2). Specifically, the predetermined threshold can be less than the maximum gradation specified by the converted data (Data2), such as 240, as needed and/or desired.

In the illustrated embodiment, with this display device 1 mentioned above, the converted data generation circuit 130 (e.g., the signal converter or converter) includes the maximum value corrector 32 (e.g., the corrector) that is configured to correct the values of the first colors (Ro', Go', Bo') (e.g., the gradation of the second signal or second gradation values) using the following formula when the values of the first colors (Ro', Go', Bo') (e.g., the gradation of the second signal or second gradation values) is larger than the maximum gradation (MAX_gray) (e.g., the predetermined threshold):

$$So = So' - (MAX\_o' - MAX\_gray)$$

where So represents the values of the first colors (Ro, Go, Bo) (e.g., the corrected second signal for each of the RGB three primary colors or corrected second gradation values for the primary colors), So' represents the values of the first colors (Ro', Go', Bo') (e.g., the second signal for each of the RGB three primary colors or second gradation values for the primary colors), MAX_o' represents the maximum value of the first colors (Ro', Go', Bo') (e.g., the gradation in the second signal or second gradation values), and MAX_gray represents the predetermined threshold.

In the illustrated embodiment, with this display device 1 mentioned above, the converted data (Data2) (e.g., the second signal or second gradation values) includes the second color (e.g., the predetermined color signal of a color or predetermined color) that is different from the RGB three primary colors, and the gradation of the second color is set to the minimum value (MIN_RGB) of the first colors (RI, GI, BI) (e.g., the gradation in the first signal or first gradation values).

In the illustrated embodiment, the display signal generation device 100 comprises the converted data generation circuit 130 (e.g., the color conversion signal generator). The converted data generation circuit 130 is configured to convert convert the source data (Data1) or the first colors (RI, GI, BI) (e.g., the first signal or first gradation values) of RGB three primary colors into the the first colors (Ro', Go', Bo') or the converted data (Data2) (e.g., the second signal or second gradation values). The converted data generation circuit 130 includes the coefficient calculator 312 (e.g., the differential acquisition component) configured to acquire the gradation differential (MAX_RGB - MIN_RGB) between MAX_RGB (e.g., the maximum value) and MIN_RGB (e.g., the minimum value) of the values of the first colors (RI, GI, BI) (e.g., the gradation in the first signal or first gradation values). The converted data generation circuit 130 is configured to generate the converted data (Data2) to decrease the amount of change in the values of the first colors (Ro', Go', Bo') (e.g., the gradation of the second signal or second gradation values) with respect to the values of the first colors (RI, GI, BI) (or the first colors (Ra, Ga, Ba)) (e.g., the gradation of the first signal or first gradation values) as the gradation differential increases.

In the illustrated embodiment, with this display signal generation device 100 mentioned above, the converted data generation circuit 130 is configured such that the amount of change in the values of the first colors (Ro', Go', Bo') with respect to the values of the first colors (RI, GI, BI) (or the first colors (Ra, Ga, Ba)) when the gradation differential is less than a predetermined value is greater than the amount of change in the values of the first colors (Ro', Go', Bo') with respect to the values of the first colors (RI, GI, BI) (or the first colors (Ra, Ga, Ba)) when the gradation differential is greater than the predetermined value.

In the illustrated embodiment, with this display signal generation device 100 mentioned above, the converted data generation circuit 130 is configured to generate the converted data (Data2) (e.g., the second signal or second gradation values) for every source data (Data1) (e.g., first signal or first gradation values) corresponding to a pixel.

In the illustrated embodiment, with this display signal generation device 100 mentioned above, the converted data (Data2) (e.g., the second signal or second gradation values) includes the second color (e.g., the predetermined color signal of a color or predetermined color) that is different from the RGB three primary colors, and the gradation of the second color is set to the minimum value (MIN_RGB) of the first colors (RI, GI, BI) (e.g., the gradation in the first signal or first gradation values).

In the illustrated embodiment, the display device 1 comprises the converted data generation circuit 130 (e.g., the signal converter or converter) configured to convert the source data (Data1) or the first colors (RI, GI, BI) (e.g., the first signal or first gradation values) of RGB three primary colors into the the first colors (Ro', Go', Bo') or the converted data (Data2) (e.g., the second signal or second gradation values). The converted data generation circuit 130 is configured to convert the source data (Data1) to the converted data (Data2) such that the amount of change in the values of the first colors (Ro', Go', Bo') with respect to the values of the first colors (RI, GI, BI) (or the first colors (Ra, Ga, Ba)) when the gradation differential is less than a predetermined value is greater than the amount of change in the values of the first colors (Ro', Go', Bo') with respect to the values of the first colors (RI, GI, BI) (or the first colors (Ra, Ga, Ba)) when the gradation differential is greater than the predetermined value.

In the illustrated embodiment, with this display device 1 mentioned above, the converted data generation circuit 130 is configured to generate the converted data (Data2) (e.g., the second signal or second gradation values) for every source data (Data1) (e.g., first signal or first gradation values) corresponding to a pixel.

In the illustrated embodiment, with this display device 1 mentioned above, the converted data generation circuit 130 is configured to convert the source data (Data1) (e.g., the first signal or first gradation values) to the converted data (Data2) (e.g., the second signal or second gradation values) using the following formula:

$$So' = (SI - MIN\_RGB)^*(k - (MAX\_RGB - MIN\_RGB)/255) + MIN\_RGB$$

where SI represents the values of the first colors (RI, GI, BI) (e.g., the first signal for each of the RGB three primary colors or the first gradation values for the primary colors), So' represents the values of the first colors (Ro', Go', Bo') (e.g., second signal for each of the RGB three primary colors or the second gradation values for the primary colors), k represents a correction coefficient, MAX_RGB represents the maximum value of the values of the first colors (RI, GI, BI) (e.g., the gradation in the first signal or the first gradation values), and MIN_RGB represents the minimum value of the values of the first colors (RI, GI, BI) (e.g., the gradation in the first signal or the first gradation values).

In the illustrated embodiment, with the display device 1 mentioned above, the converted data generation circuit 130 is configured to convert the source data (Data1) (e.g., the first signal or the first gradation values) to the converted data (Data2) (e.g., the second signal or the second gradation values) using the following formula:

$$So' = (SI - MIN\_RGB)^*(k - (MAX\_RGB - MIN\_RGB)/255) + MIN\_RGB$$

where SI represents the values of the first colors (RI, GI, BI) (e.g., the first signal for each of the RGB three primary colors or the first gradation values for the primary colors), So' represents the values of the first colors (Ro', Go', Bo') (e.g., second signal for each of the RGB three primary colors or the second gradation values for the primary colors), k represents a correction coefficient, MAX_RGB represents the maximum value of the values of the first colors (RI, GI, BI) (e.g., the gradation in the first signal or the first gradation values), and MIN_RGB represents the minimum value of the values of the first colors (RI, GI, BI) (e.g., the gradation in the first signal or the first gradation values).

In the illustrated embodiment, with this display device 1 mentioned above, the converted data generation circuit 130 (e.g., the signal converter or converter) includes the maximum value corrector 32 (e.g., the corrector) that is configured to correct the values of the first colors (Ro', Go', Bo') (e.g., the gradation of the second signal or second gradation values) to be less than or equal to the maximum gradation (MAX_gray) (e.g., the predetermined threshold).

## 2. SECOND EMBODIMENT

A display device and a display signal generation device in accordance with a second embodiment basically has the same configuration as the display device 1 and the display signal generation device 100 in accordance with the first embodiment, except that the converted data generation circuit 130 further comprises a W correction coefficient calculator 33 (e.g., a second color corrector) that corrects the chromaticity of the second color (W) displayed by the display unit 150. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

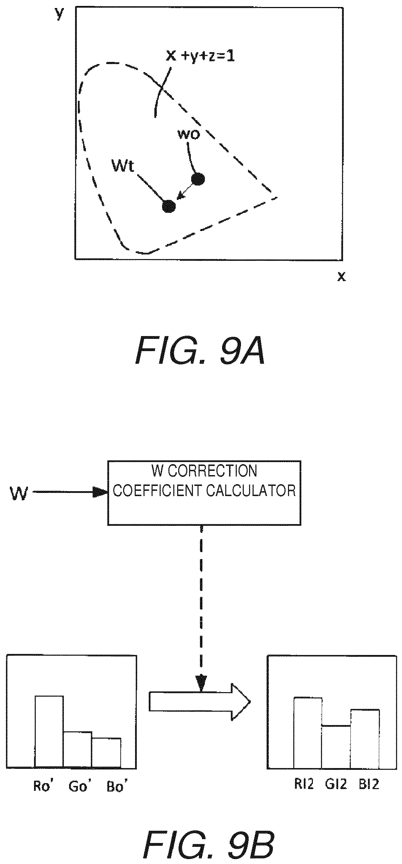

FIGS. 9A and 9B illustrate the correction of the chromaticity in the second embodiment. FIG. 9A is a chromaticity diagram that illustrates chromaticity. The chromaticity diagram shows a plane (xy plane) at some position in the z axis direction in an XYZ color system (a CIE XYZ color system) when the horizontal axis is the x axis and the vertical axis is the y axis. Since conversion from R, G, B to x, y, z is conventionally well known in the art, the detailed description will be omitted for the sake of brevity. Also, in the chromaticity diagram, the horizontal x axis and the y axis are defined by values from 0 to 1, and all colors are present in a plane in space in which $x + y + z = 1$ in this xy plane.

With a display unit having RGBW pixels, there are cases in which the white color (Wt) generated when only the Ro, Go, and Bo pixels are displayed for the Ro, Go, Bo, and Wo corresponding to the second signal and the white color (Wo) generated when only the Wo pixel is displayed for the Ro, Go, Bo, and Wo do not match. For example, in the chromaticity diagram shown in FIG. 9A, if the value of W that is desired in a given pixel is Wt, whereas the value of W reproduced by the display unit 150 is Wo, then there will be a difference in the chromaticity. In this second embodiment, as shown in FIG. 9B, the values of the first colors (Ro', Go', Bo') are corrected based on the value of the second color (Wo), and the chromaticity of W displayed on the display unit 150 is adjusted.

Again in this second embodiment, just as in FIG. 3, the converted data generation circuit 130 comprises the first gamma corrector 10, the maximum/minimum value detector 20, the RGBW generator 30, and the second gamma corrector 40. The first gamma corrector 10 cancels gamma correction of the source data (Data1). The maximum/minimum value detector 20 detects the maximum value and the minimum value of the source data (Data1). The RGBW generator 30 acquires the values of the first colors and the second color based on the values of the first colors of the source data (Data1). The second gamma corrector 40 performs gamma correction on the values of the first colors and the second color outputted from the RGBW generator 30. Other than the RGBW generator 30, the components of the display device 1 and the display signal generation device 100 are the same as in the first embodiment and will not be described again.

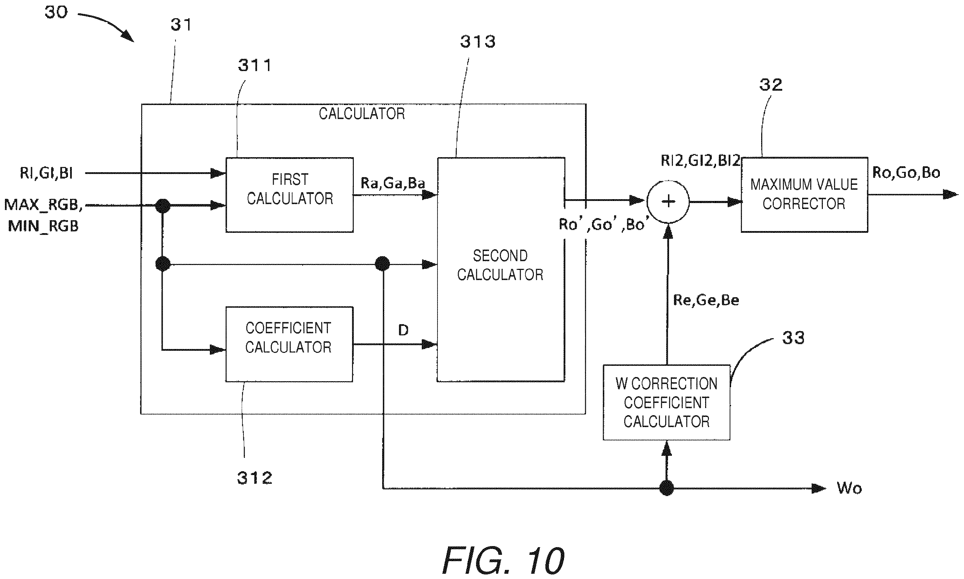

FIG. 10 is a block diagram illustrating the configuration of the RGBW generator 30 in accordance with the second embodiment. The RGBW generator 30 shown in FIG. 10 has the calculator 31, the maximum value corrector 32, and the W correction coefficient calculator 33. The calculator 31 generates the values of four colors (R, G, B, W) from the first colors (RI, GI, BI). The maximum value corrector 32 corrects the first colors converted by the calculator 31 so as not to exceed the number of gradations (such as 0 to 255) of the converted data (Data2). The W correction coefficient calculator 33 acquires correction values for adjusting the chromaticity of the first colors based on the second color.

Again in this second embodiment, the calculator 31 has the first calculator, the coefficient calculator 312, and the second calculator 313. The first calculator 311 subtracts the value corresponding to the gradation value of the second color (W) from the first colors (RI, GI, BI). The coefficient calculator 312 calculates the first correction coefficient D based on the saturation of the first colors. The second calculator 313 converts the first colors based on the first correction coefficient D and the output of the first calculator 311.

The output side of the second color (Wo) of the calculator 31 is connected in parallel to the input side of the W correction coefficient calculator 33. The output side of the first colors (Ro', Go', Bo') of the calculator 31 (that is, the output side of the second calculator 313) is connected in parallel to the output side of the W correction coefficient calculator 33. The W correction coefficient calculator 33 comprises a lookup table (not shown) and function blocks for performing processing based on mathematical functions. The W correction coefficient calculator 33 outputs the correction coefficients (Re, Ge, Be) shown in the following Formula (7) according to the input of the second color (Wo) from the calculator 31.

$$Re = Gr (Wo)$$

$$Ge = Gg (Wo)$$

$$Be = Gb (Wo) \qquad \ldots (7)$$

With this Formula (7), the correction coefficients (Re, Ge, Be) are coefficients for correcting the chromaticity of the second color (Wo) using the RGB three primary colors. Here, Re is a correction coefficient added to the output of Ro' from the calculator 31. Ge is a correction coefficient added to the output of Go' from the calculator 31. Be is a correction coefficient added to the output of Bo' from the calculator 31. Wo is the value of the minimum value (MIN_RGB).

The above-mentioned correction coefficients (Re, Ge, Be) are combined with the first colors (Ro', Go', Bo') that are the output from the calculator 31. Thus, the corrected first colors (RI2, GI2, BI2) shown in the following Formula (8) are inputted to the maximum value corrector 32.

$$RI2 = Ro' + Re$$

$$GI2 = Go' + Ge$$

$$BI2 = Bo' + Be \qquad \ldots (8)$$

If the W correction coefficient calculator 33 has a lookup table for acquiring the correction coefficients (Re, Ge, Be) from the value of the second color (W), then this lookup table will record correlations based on the inputted values for the first colors and the value obtained by actually measuring the chromaticity of the second color with the display unit 150.

The maximum value corrector 32 corrects the corrected first colors (RI2, GI2, BI2) so as not to exceed the number of gradations (such as 0 to 255) of the converted data (Data2). For example, the maximum value corrector 32 corrects the corrected first colors (RI2, GI2, BI2) according to the above-mentioned Formulas (5) and (6). Again in this second embodiment, the above-mentioned Formula (5) is applied when the corrected first colors (RI2, GI2, BI2) exceed the maximum gradation MAX_gray, while the above-mentioned Formula (6) is applied when the corrected first colors (RI2, GI2, BI2) are below the maximum gradation MAX_gray.

The values of the first colors (Ro, Go, Bo) and the second color (Wo) that have been corrected by the maximum value corrector 32 are inputted through the second gamma corrector 40 as the converted data (Data2) to the timing controller 140. The timing controller 140 then drives the display unit 150, and an image based on the converted data (Data2) is displayed.

As described above, with this second embodiment, in addition to correction for adjusting the gradation saturation as in the first embodiment, the chromaticity of the second color (W) can also be adjusted. This improves image quality.

Thus, in this embodiment, if the second signal includes a predetermined color signal of a color that is different from the RGB three primary colors, the converted data generation circuit 130 (e.g., the signal converter or the color conversion signal generator) has the W correction coefficient calculator 33 (e.g., the second color corrector) that corrects the chromaticity of the second signal such that the chromaticity of the predetermined color signal will be substantially the same as the chromaticity of a component of the predetermined color signal obtained from the RGB three primary colors of the second signal.

In the illustrated embodiment, with the display device 1 mentioned above, the converted data (Data2) (e.g., the second signal or second gradation values) includes the second color (e.g., the predetermined color signal of a color or predetermined color) that is different from the RGB three primary colors. The converted data generation circuit 130 has the W correction coefficient calculator 33 (e.g., the second color corrector) that is configured to correct the chromaticity of the second signal such that the chromaticity of the second color (W) (e.g., the predetermined color signal or predetermined color) is substantially equal to the chromaticity of a component of the second color (W) (e.g., the predetermined color signal or predetermined color) obtained from the first colors (Ro, Go, Bo) (e.g., RGB three primary colors of the second signal or primary colors of the second gradation values).

In the illustrated embodiment, with the display signal generation device 100, the converted data (Data2) (e.g., the second signal or the second gradation values) includes the second color (e.g., the predetermined color signal of a color or predetermined color) that is different from the RGB three primary colors. The converted data generation circuit 130 has the W correction coefficient calculator 33 (e.g., the second color corrector) that is configured to correct the chromaticity of the second signal such that the chromaticity of the second color (W) (e.g., the predetermined color signal or predetermined color) is substantially equal to the chromaticity of a component of the second color (W) (e.g., the predetermined color signal or predetermined color) obtained from the first colors (Ro, Go, Bo) (e.g., RGB three primary colors of the second signal or primary colors of the second gradation values).

3. THIRD EMBODIMENT

A display device and a display signal generation device in accordance with a third embodiment basically has the same configuration as the display device 1 and the display signal generation device 100 in accordance with the first and second embodiments. In view of the similarity between the first to third embodiments, the parts of the third embodiment that are identical to the parts of the first and second embodiments will be given the same reference numerals as the parts of the first embodiment. Moreover, the descriptions of the parts of the third embodiment that are identical to the parts of the first and second embodiment may be omitted for the sake of brevity. Specifically, in the first and second embodiment, the white color (W) is used as the second color. However, this is not the only option. In the third embodiment, the yellow color (Y) is used as the second color instead. When yellow is used as the second color, it is obtained by mixing equal amounts of red and green. Therefore, the method for acquiring the minimum value (MIN_RGB) given in the first and second embodiments involves acquiring it has the maximum common divisor of red and green. Specifically, the minimum value of the gradation values of the first colors (RI, GI) is used as MIN_RGB, and is changed to the second color (Y).

Also, in the third embodiment, the adjustment of the chromaticity in the second embodiment is performed with respect to yellow. Accordingly, the W correction coefficient calculator 33 calculates only $Re = Gr(W)$ and $Ge = Gg(W)$ out of the above-mentioned Formula (7) using the yellow color (Y) as the second color. For example, the W correction coefficient calculator 33 calculates $Re = Gr(Y)$ and $Ge = Gg(Y)$ in Formula (7). Also, only the correction coefficients (Re, Ge) are combined with the first colors (Ro', Go', Bo') that are the output from the calculator 31. The maximum value corrector 32 performs correction on the first color (BI) that has not been corrected and the corrected first colors (RI2, GI2) in the above-mentioned Formula (8).

In the illustrated embodiment, with the display device 1 and the display signal generation device 100, the second color (e.g., the predetermined color signal or predetermined color) is a color signal of either white or yellow.

4. OTHER EMBODIMENT

As mentioned above, the display signal generation device 100 can be a device that is not equipped with the display unit 150. In this case, the display signal generation device 100 supplies the converted data (Data2) to the display unit 150 that is connected by wire or wirelessly. Also, in this case, the display device 1 includes the display signal generation device 100 and the display unit 150.

The display signal generation device 100 can comprise just the second gamma corrector 40, and does not need to comprise the main gamma corrector 121 and the first gamma corrector 10.

The display signal generation device 100 does not need to be equipped with the display unit 150, and can output the converted data (Data2) to an external display unit or device that is externally connected.

Apart from a method in which the saturation is acquired from the first colors (RI, GI, BI) outputted from the first gamma corrector 10, the saturation may also be acquired from the first colors (Ra, Ga, Ba) outputted from the first calculator 311 (FIG. 5, for example). In this case, the saturation S can be approximately acquired based on the differential between the maximum value (MAX_RGB) and the minimum value (MIN_RGB) of the first colors (Ra, Ga, Ba).

It should go without saying that the present invention is not limited to the examples given above. And while it will be obvious to a person skilled in the art, the following are also disclosed as working examples of the present invention:

- Suitably combining and modifying the members, components, and so forth that are mutually interchangeable and are disclosed in the above examples,
- Suitably replacing members, components, and so forth that are mutually interchangeable, for members, components, and so forth that are disclosed in the above examples and are prior art, although not disclosed in the above examples, and
- Suitably replacing members, components, and so forth that could be imagined by a person skilled in the art, based on prior art and the like, as substitutes for the members, components, and so forth disclosed in the above examples, although not disclosed in the above examples.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

**Claims**

1. A display device comprising:

   a converter configured to convert first gradation values of a plurality of primary colors into second gradation values; and
   a display configured to display an image based on the second gradation values,
   an amount of change in the second gradation values with respect to the first gradation values when a differential between maximum and minimum values of the first gradation values is smaller than a predetermined value being larger than the amount of change when the differential is larger than the predetermined value.

2. The display device according to claim 1, wherein
   the converter is configured to decreases the amount of change as the differential increases.

3. The display device according to claim 1 or 2, wherein
   the converter is configured to generate the second gradation values for the first gradation values corresponding to a pixel.

4. The display device according to any one of claims 1 to 3, wherein
   the converter includes a corrector that is configured to correct the second gradation values to be smaller than or equal to a predetermined threshold.

5. The display device according to any one of claims 1 to 4, wherein
   the second gradation values includes a value of a predetermined color that is different from the primary colors, and
   the value of the predetermined color is set to the minimum value of the first gradation values.

6. The display device according to any one of claims 1 to 5, wherein
   the second gradation values includes a value of a predetermined color that is different from the primary colors, and
   the converter has a second corrector that is configured to correct the chromaticity of the second gradation values such that the chromaticity of the predetermined color is substantially equal to the chromaticity of a component of the predetermined color obtained from the primary colors of the second gradation values.

7. The display device according to claim 5 or 6, wherein
   the predetermined color is either white or yellow.

8. The display device according to any one of claims 1 to 7, wherein
   the converter is configured to convert the first gradation values into the second gradation values using the following formula:

$$So' = (SI - MIN\_RGB)*(k - (MAX\_RGB - MIN\_RGB)/255) + MIN\_RGB$$

where SI represents the first gradation values for the primary colors, So' represents the second gradation values for the primary colors, k represents a correction coefficient, MAX_RGB represents the maximum value of the first gradation values, and MIN_RGB represents the minimum value of the first gradation values.

9. The display device according to claim 8, wherein
the correction coefficient k is a value that is larger than or equal to zero and smaller than three.

10. The display device according to any one of claims 1 to 9, wherein
the converter includes a corrector that is configured to correct the second gradation values using the following formula when the second gradation values are larger than a predetermined threshold:

$$So = So' - (MAX\_o' - MAX\_gray)$$

where So represents the corrected second gradation values for the primary colors, So' represents the second gradation values for the primary colors, MAX_o' represents the maximum value of the second gradation values, and MAX_gray represents the predetermined threshold.

11. A display signal generation device comprising:

a color conversion signal generator that is configured to convert first gradation values of a plurality of primary colors into second gradation values,
the color conversion signal generator including a differential acquisition component configured to acquire a differential between maximum and minimum values of the first gradation values, and
the color conversion signal generator being configured to generate the second gradation values to decrease an amount of change in the second gradation values with respect to the first gradation values as the differential increases.

12. The display signal generation device according to claim 11, wherein
the color conversion signal generator is configured such that the amount of change when the differential is smaller than a predetermined value is larger than the amount of change when the differential is larger than the predetermined value.

13. The display signal generation device according to claim 11 or 12, wherein
the color conversion signal generator is configured to generate the second gradation values for the first gradation values corresponding to a pixel.

14. The display signal generation device according to any one of claims 11 to 13, wherein
the second gradation values includes a value of a predetermined color that is different from the primary colors, and
the value of the predetermined color is set to the minimum value of the first gradation values.

15. The display signal generation device according to any one of claims 11 to 14, wherein
the second gradation values includes a value of a predetermined color that is different from the primary colors, and
the color conversion signal generator has a second corrector that is configured to correct the chromaticity of the second gradation values such that the chromaticity of the predetermined color is substantially equal to the chromaticity of a component of the predetermined color obtained from the primary colors of the second gradation values.

1

100

DETAIL VIEW OF PIXEL P

| R | G | B | W |

Pr Pg Pb Pw

FIG. 1

FIG. 2

EP 3 163 862 A1

Ri,Gi,Bi →

**FIRST GAMMA CORRECTOR** `10`

→ RI,GI,BI →

**MAXIMUM/ MINIMUM VALUE DETECTOR** `20`

↓ MAX_RGBMIN_RGB

**RGBW GENERATOR** `30`

→ Ro,Go,Bo,Wo →

**SECOND GAMMA CORRECTOR** `40`

→ (Ro,Go,Bo,Wo)^γ

`130`

## FIG. 3

GRADATION

MAX_RGB

MIN_RGB

RI   GI   BI

# FIG. 4

RI,GI,BI

MAX_RGB,
MIN_RGB

CALCULATOR

31

30

311

FIRST
CALCULATOR

Ra,Ga,Ba

313

SECOND
CALCULATOR

COEFFICIENT
CALCULATOR

312

D

Wo

Ro',Go',Bo'

32

MAXIMUM VALUE
CORRECTOR

Ro,Go,Bo

*FIG. 5*

## FIG. 6A

ADDITIVE
MIXTURE OF
COLORS

GRADATION

MIN_RGB ·····

RI GI BI Wo

RI=200
GI=150
BI=80 (MIN_RGB)
Wo=0

=

GRADATION

Ra Ga Ba Wo

RI=120
GI=70
BI=0
Wo=80

## FIG. 6B

AMOUNT OF
CHANGE
(AMOUNT OF
INCREASE)

0    S1    S2    SATURATION S

*FIG. 7A*

SATURATION S1

Ra Ga Ba

Ro' Go' Bo'

*FIG. 7B*

SATURATION S2

Ra Ga Ba

Ro' Go' Bo'

*FIG. 7C*

24

GRADATION

MAX_gray

Ro' Go' Bo'

MAX_o' >MAX_gray

GRADATION

MAX_gray

Ro Go Bo

## FIG. 8A

GRADATION

MAX_gray

Ro' Go' Bo'

MAX_o' ≦MAX_gray

GRADATION

MAX_gray

Ro Go Bo

## FIG. 8B

FIG. 9A

FIG. 9B

*FIG. 10*

Europäisches
Patentamt

European
Patent Office

Office européen
des brevets

# EUROPEAN SEARCH REPORT

Application Number

EP 16 19 5580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/035961 A1 (JANG YONG JUN [KR] ET AL) 6 February 2014 (2014-02-06) * paragraph [0054] - paragraph [0066]; figures 1,2,3 * | 1-15 | INV. H04N1/60 H04N9/64 |
| X | US 2004/223005 A1 (LEE BAEK-WOON [KR]) 11 November 2004 (2004-11-11) * paragraph [0114] - paragraph [0130]; figure 12 * | 1-15 | |
| A | EP 2 180 461 A1 (TPO DISPLAYS CORP [TW]) 28 April 2010 (2010-04-28) * paragraph [0060] - paragraph [0062]; figures 10a-c * | 1-15 | |

TECHNICAL FIELDS
SEARCHED (IPC)

H04N

The present search report has been drawn up for all claims

| Place of search | Date of completion of the search | Examiner |
|---|---|---|
| Munich | 16 March 2017 | Bakstein, Hynek |

EPO FORM 1503 03.82 (P04C01)

## EP 3 163 862 A1

## ANNEX TO THE EUROPEAN SEARCH REPORT
## ON EUROPEAN PATENT APPLICATION NO.

EP 16 19 5580

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2017

| Patent document cited in search report | | Publication date | Patent family member(s) | | Publication date |
|---|---|---|---|---|---|
| US 2014035961 | A1 | 06-02-2014 | KR<br>US | 20140018606 A<br>2014035961 A1 | 13-02-2014<br>06-02-2014 |
| US 2004223005 | A1 | 11-11-2004 | JP<br>JP<br>KR<br>TW<br>US | 4494808 B2<br>2004295086 A<br>20040083786 A<br>I352327 B<br>2004223005 A1 | 30-06-2010<br>21-10-2004<br>06-10-2004<br>11-11-2011<br>11-11-2004 |
| EP 2180461 | A1 | 28-04-2010 | CN<br>EP<br>TW<br>US | 101763803 A<br>2180461 A1<br>201017640 A<br>2010103187 A1 | 30-06-2010<br>28-04-2010<br>01-05-2010<br>29-04-2010 |

EPO FORM P0459

For more details about this annex : see Official Journal of the European Patent Office, No. 12/82

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015210630 A

- JP 2007171907 A